# EUROPEAN PATENT APPLICATION

(11) **EP 1 853 009 A1**
(43) Date of publication of application: **07.11.2007**
(21) Application number: 06009367.1
(22) Date of filing: 05.05.2006
(51) Int. Cl.: H04L 12/56

(54) **Resource control for scheduled and non-scheduled traffic**

(71) Applicant: Nokia Corporation, 02150 Espoo (FI)
(72) Inventor: Wigard, Jeroen, 9270 Klarup (DK); Boussif, Malek, 9000 Aalborg (DK)
(74) Representative: Eisenführ, Speiser & Partner

(57) **Abstract**

The present invention relates to a method, network device and computer program product for controlling resources for scheduled and non-scheduled transmissions in a communication network, wherein at least one threshold for a combined throughput of the scheduled and non-scheduled transmissions is determined, and at least two throughput areas are determined based on the at least one threshold. For each of the at least two throughput areas (210, 220, 230), dedicated transmission priority orders for traffic types of the scheduled and non-scheduled transmission are allocated, and resource allocation for the scheduled and non-scheduled transmissions is controlled based on the dedicated transmission priority orders. Thereby, resources can be clearly split with priorities for optimal utilization. Operators can control how much resources should be allocated for non-scheduled and scheduled transmissions and traffic is protected according to the resource shares.

## Description

### FIELD OF THE INVENTION

The present invention relates to a method, network device and computer program product for controlling resource allocation for scheduled and non-scheduled traffic in a telecommunication network. According to a specific example, the present invention relates to resource control for High Speed Uplink Packet Access (HSUPA) in the Universal Mobile Telecommunications System (UMTS).

### BACKGROUND OF THE INVENTION

The volume of IP (Internet Protocol) traffic has already exceeded that for circuit-switched traffic in most fixed networks. The same change will happen in mobile networks as new IP-based mobile services, such as video news bulletins, downloading music or checking bus arrivals, become available and are used by more people in their daily communications.

Delivery of digital content over mobile networks, as well as IP-based person-to person communication that combines different media and services into a single session, will generate additional traffic and revenue. The volume of data bits used in communications will grow faster than revenue, driving operators to optimize their networks to support the dominant traffic type. While downlink optimization is enough for content-to-person services, real interactive and person-to-person, IP-based services require uplink optimization as well. To reduce latency and raise uplink throughput, an enhanced uplink dedicated channel (EDCH) which is also called HSUPA, has been introduced in the 3GPP (3rd Generation Partnership Project) Release 6 specifications TS 25.309 (V6.4.0) and TR 25.896.

The benefits of HSUPA are directed to improvement of uplink coverage, throughput, delay reduction, and improvement of affinity for IP (Internet Protocol) based services (e.g. video clips, games, video streaming etc.) Moreover, HSUPA is also expected to achieve significant improvements in overall system performance when operated together with the downlink equivalent High Speed Downlink Packet Access (HSDPA).

In particular, HSUPA introduces - among other features - fast Node B scheduling, wherein the base station devices (i.e. "Node B" in UMTS terminology) are configured to control transmission rate and to schedule transmissions of mobile stations or terminals (i.e. user equipments (UEs) in UMTS terminology). Scheduling is performed by the Node B in order to keep the noise rise (or signal-to-noise power ratio) within a required range. Since the control delay is shorter than that of the radio network controller (RNC), adaptive control is performed in correspondence with noise rise fluctuation. When a smaller noise raise margin is set, uplink capacity can be increased.

Thus, some of the packet scheduler functionality is shifted to the Node Bs to have faster scheduling of bursty non-real-time traffic than the layer 3 (L3) in the RNC facilitates. The idea is that with faster link adaptation it is possible to more efficiently share the uplink power resource between packet data users. When packets have been transmitted from one user, the scheduled resource can be made available immediately to another user.

The RNC takes care of dedicated channels and allocates a maximum target received total wideband power to the Node B (which the Node B uses to schedule resources to the scheduled EDCH users). In particular, the RNC uses a hybrid power-throughput based radio resource management (RRM) scheme for dedicated channels, wherein a certain minimum total throughput, DCH Minimum Throughput, can be scheduled without considering the power resources. When the sum of scheduled bit rates in a cell exceeds this threshold, then the power resources need to be considered. This is done by comparing the total received power to a target value Prx_target. As long as the total received power is below this target, bit rates can be increased. When the total received power exceeds the target plus some offset value (Prx_target + Prx_offset), then the bit rates are to be decreased. At the same time the sum of the scheduled bit rates in a cell needs to be below a maximum throughput threshold. If this threshold is reached, no more increases are allowed.

However, the EDCH traffic can be split into two parts: scheduled EDCH, which runs through the packet scheduler in the Node B and non-scheduled transmission (NST), which bypasses the packet scheduler in the Node B and is controlled by the RNC. In case of NST, the RNC allocates at the start of a MAC-d (dedicated Media Access Control) flow a non scheduled transmission grant to a UE. This grant can then be used by the UE at any time without any further procedures. This gives a delay gain since no rate request - rate grant loop has to be run, as with scheduled HSUPA transmission. A UE can have transmission on NST and scheduled EDCH simultaneously with the limitation that if the resources allocated to NST are not used, then they cannot be used for scheduled transmission. Hence, the RNC controls NST and thus needs to do some resource reservation for this traffic.

### SUMMARY OF THE INVENTION

It is therefore an object of the present invention to provide a way of allocating resources to non-scheduled transmission from the network controller device as part of the admission control procedure.

This object is achieved by a method of controlling resources for scheduled and non-scheduled transmissions in a communication network, said method comprising the steps of:
- setting at least one threshold for a combined throughput of said scheduled and non-scheduled transmissions;
- defining at least two throughput areas based on said at least one threshold;
- allocating for each of said at least two throughput areas dedicated transmission priority orders for traffic types of said scheduled and non-scheduled transmission; and
- controlling resource allocation for said scheduled and non-scheduled transmissions based on said dedicated transmission priority orders.

Furthermore, the above object is achieved by a network device for controlling resources for scheduled and non-scheduled transmissions in a communication network, the network device comprising:
- setting means for setting at least one threshold for a combined throughput of said scheduled and non-scheduled transmissions;
- priority allocation means for allocating at least two throughput areas based on said at least one threshold, and for allocating for each of said at least two throughput areas dedicated transmission priority orders for traffic types of said scheduled and non-scheduled transmission; and
- resource control means for controlling resource allocation for said scheduled and non-scheduled transmissions based on said dedicated transmission priority orders.

Accordingly, resources can be clearly split between transparent and non-transparent transmissions with priorities for optimal utilization. Additionally, operators can control how much resources shall be allocated for non-scheduled and scheduled transmission and the traffic is protected according to the resource shares. Waste of capacity can thus be prevented, since one traffic type can utilize unused capacity of other traffic types.

The at least one threshold may comprise a minimum value of the combined throughput for a subset of said traffic types and a maximum value of the combined throughput for said subset of said traffic types. Thereby, resource shares can be guaranteed for said subsets.

Respective bit rates allocated to the scheduled transmission and the non-scheduled transmission may be determined and used in priority allocation.

Furthermore, a priority information may be generated in response to the allocating step, the priority information indicating a priority order of the traffic types or at least a traffic type to which the highest priority has been allocated. In particular, the throughput areas may comprise a first area defined below a minimum value of scheduled throughput of a predetermined traffic type (e.g. dedicated channel traffic), a second area defined between the minimum value of the scheduled throughput and a minimum value of the combined throughput of the subset, and a third area defined above the minimum value of the combined throughput of the subset. The traffic types may comprise dedicated channel traffic, scheduled enhanced dedicated channel traffic, and non-scheduled traffic. The subset of traffic types may comprise dedicated channel traffic and non-scheduled transmission. As an example, if said combined throughput of the subset is determined to be located within the first throughput area, then the priority order is set so that the highest priority is allocated to the dedicated channel traffic; if the combined throughput is determined to be located within the second throughput area, then the priority order is set so that the highest priority is allocated to the non-scheduled traffic, and if the combined throughput is determined to be located within the third throughput area, then the priority order is set so that the highest priority is allocated to the scheduled enhanced dedicated channel traffic.

Moreover, the lowest priority is allocated to the scheduled enhanced dedicated channel traffic, if the combined throughput of the subset is determined to be located within the first or second throughput area. As a further option, an additional priority information indicating a traffic type, to which the second highest priority is allocated, is signaled, if the combined throughput is determined to be located within the third throughput area.

Further advantageous modifications are defined in the dependent claims.

### BRIEF DESCRIPTION OF THE DRAWINGS

In the following, the present invention will be described in greater detail based on an embodiment with reference to the accompanying drawings in which:
Fig. 1 shows a schematic diagram indicating a radio network architecture in which the present invention can be implemented;
Fig. 2 shows a schematic block diagram of a network controller device according to the preferred embodiment; and
Fig. 3 shows an overview with different scheduling areas and corresponding priority allocations according to the preferred embodiment.

### DESCRIPTION OF THE PREFERRED EMBODIMENT

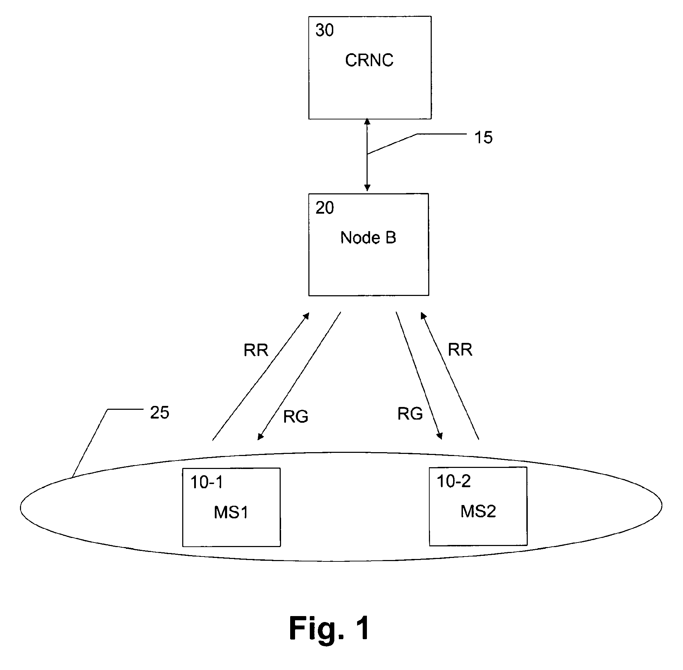

The preferred embodiments will now be described on the basis of a radio access network architecture as shown in Fig. 1.

Fig. 1 shows a schematic diagram of an architecture indicating a radio network architecture in which the present invention can be implemented.

According to Fig. 1, a Node B 20 provides access to the radio access network within an allocated cell 25 in which two UEs 10-1 and 10-2 are shown to be radio-connected to the Node B 20. The Node B 20 is further connected to a Controlling RNC (CRNC) 30 and exchanges control information 15 for resource allocation in connection with scheduled transmission (e.g. scheduled DCH data and scheduled EDCH data) and non-scheduled transmission (NST).

When NST is configured by the CRNC 30, the UEs 10-1, 10-2 are allowed to send non-scheduled EDCH data at any time, up to a predetermined threshold, without receiving any scheduling command from the Node B 20. Thus, signaling overhead and scheduling delay are minimized. Typical examples of data that may use NST are the SRBs and GBR services. NSTs are defined per MAC-d flow, while resource for NST is allocated by the CRNC 30 in terms of maximum number of bits that can be included in a MAC-e PDU, and is called non-scheduled grant. Logical channels will be served in the order of their priorities until the non-scheduled grant and scheduled grants are exhausted, or the maximum transmit power is reached.

In the Node B scheduling process for scheduled traffic types of EDCH and DCH, the UEs 10-1, 10-2 send respective Layer 1 (L1) control signals for uplink transmission as Rate Request (RR) to the Node B 20. In response, the Node B 20 returns respective L1 signals as Rate Grant (RG) to the UEs 10-1, 10-2. The L1 signal from UE for RR has a rate-increasing requirement based on a total buffer size. RG is used for controlling fluctuations for power offset.

In the preferred embodiment, throughput ranges are separated by a selectable NST+DCH minimum throughput (indicating the maximum throughput to be scheduled for traffic types of DCH and NST in the cell 25), and a selectable NST+DCH maximum throughput (indicating the maximum throughput to be scheduled for traffic types of DCH and NST in the cell 25), wherein predetermined priority allocation schemes are applied within the throughput ranges.

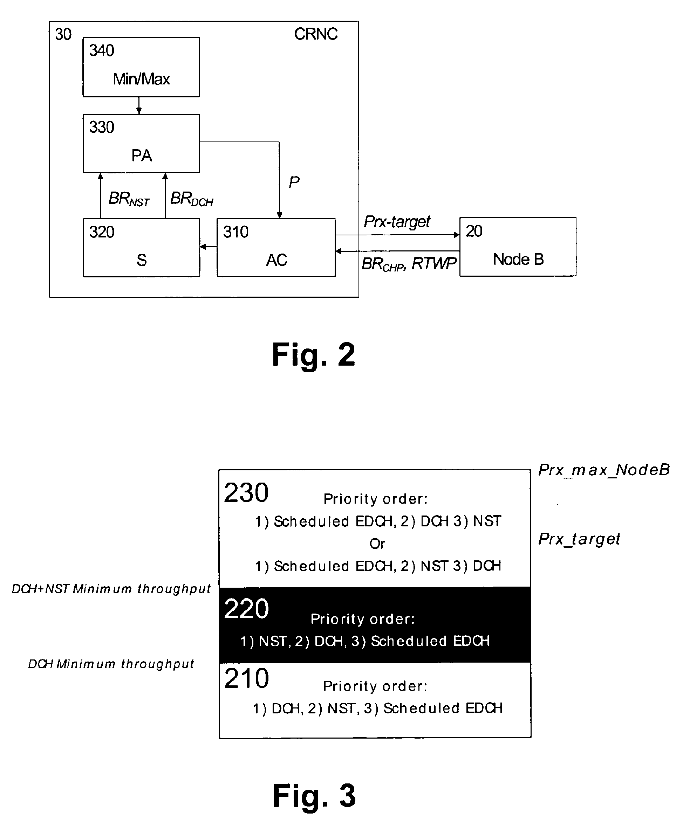

Fig. 2 shows a schematic block diagram the CRNC 30 of Fig. 1.

The CRNC 30 comprises an admission control function or unit 310 which exchanges a control signaling with the Node B 40 to control resource allocation for DCH traffic, scheduled EDCH traffic, and NST traffic. This control signaling comprises the target value Prx-target of the total received power, signaled from the CRNC 30 to the Node B 20, and a provided bit rate BR_{CHP} per logical channel priority of scheduled EDCH channels and a received total wideband power RTWP, both signaled from the Node B 20 to the RNC 30. Based on the operation of and signals received by the admission control unit 310, a scheduler function or unit 320 determines a bit rate BR_{NST} currently allocated to NST traffic and a bit rate BR_{DCH} currently allocated to scheduled DCH.

The determined bit rates BR_{NST} and BR_{DCH} are supplied to a priority allocation function or unit 330 which allocates a priority order to the different traffic types, e.g., NST, scheduled DCH, and scheduled EDCH, and generates a priority information P, e.g., priority parameter, to indicate the allocated priority order or at least a traffic type to which the highest priority has been allocated. The priority allocation is performed on the basis of a Min/Max setting function or unit 340 configured to set the NST+DCH minimum throughput and the NST+DCH maximum throughput mentioned above. This setting may be controlled by an internal control function of the RNC 30, or by an external input function. Based on the priority information P, the admission control unit 310 controls resource allocation for scheduled and non-scheduled traffic.

Fig. 3 shows an overview with different scheduling areas and corresponding priority allocations used by the priority allocation unit 330 according to the preferred embodiment.

The resources can be split into power or throughput. This is shown in Fig. 3, where the left axis or edge shows the throughput domain and the right axis or edge shows the power domain. Three different areas can be defined. A first area 210 is defined below the DCH minimum throughput. As long as the sum of the scheduled throughput for DCH traffic is below this value, no power resources need to be checked. DCH traffic has first or highest priority in this area 210, while NST traffic has second highest priority and scheduled EDCH traffic has lowest priority.

Additionally, an area 220 is defined below DCH+NST minimum throughput set by the Min/Max setting unit 340 and above DCH minimum throughput. As long as the sum of the throughputs for DCH traffic and NST traffic, as calculated based on the bit rates BR_{NST} and BR_{DCH}, is below this value, no power resources need to be checked for NST traffic and DCH traffic. Within the area 220, NST traffic has first or highest priority, when DCH traffic is equal to or exceeds the DCH minimum throughput. DCH traffic has second highest priority and scheduled EDCH has lowest priority.

In the area 230 above DCH+NST minimum throughput and up to the DCH+NST maximum throughput (not shown in Fig. 3) power resources need to be checked. Since the maximum power level given to the Node B 20 for scheduled EDCH is typically higher than Prx-target + Prx-offset, scheduled EDCH has the highest priority in this area 230. An additional priority parameter may be used in the area 230 to indicate which of the other two traffic types (DCH and NST) has the second highest priority.

It is noted however that other priority allocations or orders may be used in more or less priority allocation areas. Additionally, other thresholds may be used to split throughput areas and other specific types of scheduled and non-scheduled traffic may be controlled by the proposed resource allocation scheme. Moreover, it should be understood that the functions or blocks of Fig. 2 can be implemented with discrete circuit elements or as software routines which are executed by a suitable data processor provided in the RNC 30. A combination of circuit elements and software routines may also be employed.

The proposed resource allocation for scheduled and non-scheduled traffic provides a clear resource split with priorities for optimal utilisation. Due to the provision of the Min/Max setting unit 340, an operator can control how much throughput should be allocated for DCH, NST and scheduled EDCH transmission and the traffic is protected according to the resource shares. Additionally, channel or transmission capacity is not wasted, since one traffic type can utilise unused capacity of the other traffic types.

In summary, a method, system, client device, conference server device and computer program product for controlling media composition in a multi-party conversation involving a central control point have been described. At a participant of said multi-party conversation, a scope information which specifies members of said multi-party conversation is selected and added to a session modifying request. The session modifying request is transmitted to the central control point which initiates a media modification at the specified members in response to the scope information. Thereby, a client can control whether media modification is applied to the whole conference, selected participants or only between the client itself and the conference server.

It is noted that the present invention is not restricted to the above preferred HSUPA-based embodiments, but can be applied in connection with any type of mobile or fixed communication network, where resources are shared between scheduled and non-scheduled transmissions. The preferred embodiments may thus vary within the scope of the attached claims.

## Claims

1. A method of controlling resources for scheduled and non-scheduled transmissions in a communication network, said method comprising the steps of:
a) setting at least one threshold for a combined throughput of said scheduled and non-scheduled transmissions;
b) defining at least two throughput areas (210, 220, 230) based on said at least one threshold;
c) allocating for each of said at least two throughput areas (210, 220, 230) dedicated transmission priority orders for traffic types of said scheduled and non-scheduled transmission; and
d) controlling resource allocation for said scheduled and non-scheduled transmissions based on said dedicated transmission priority orders.

2. A method according to claim 1, wherein said at least one threshold comprises a minimum value of combined throughput for a subset of said traffic types and a maximum value of said combined throughput for said subset.

3. A method according to claim 1 or 2, further comprising the steps of determining respective bit rates allocated to said traffic types, and using said determined respective bit rates in said allocating step.

4. A method according to any one of the preceding claims, further comprising the step of generating a priority information (P) in response to said allocating step, said priority information indicating a priority order of said traffic types or at least a traffic type to which the highest priority has been allocated.

5. A method according to any one of the preceding claims, wherein said throughput areas comprise a first area (210) defined below a minimum value of scheduled throughput of a predetermined kind of traffic, a second area (220) defined between said minimum value of said scheduled throughput and a minimum value of the combined throughput for a subset of traffic types, and a third area (230) defined above said minimum value of said combined throughput of said subset.

6. A method according to claim 5, wherein said traffic types comprise dedicated channel traffic, scheduled enhanced dedicated channel traffic, and non-scheduled traffic, wherein said subset comprises said dedicated channel traffic and said non-scheduled traffic, and wherein said predetermined kind of traffic comprises said dedicated channel traffic.

7. A method according to claim 6, wherein, if said combined throughput is determined to be located within said first throughput area (210), then the priority order is set so that the highest priority is allocated to said dedicated channel traffic; if said combined throughput is determined to be located within said second throughput area (220), then the priority order is set so that the highest priority is allocated to said non-scheduled traffic, and if said combined throughput is determined to be located within said third throughput area (230), then the priority order is set so that the highest priority is allocated to said scheduled enhanced dedicated channel traffic.

8. A method according to claim 7, wherein the lowest priority is allocated to said scheduled enhanced dedicated channel traffic, if said combined throughput is determined to be located within said first (210) or second throughput area (220).

9. A method according to claim 7 or 8, wherein an additional priority information indicating a traffic type, to which the second highest priority is allocated, is signaled, if said combined throughput is determined to be located within said third throughput area (230).

10. A method according to any one of the preceding claims, wherein said non-scheduled transmission is a high speed uplink packet access (HSUPA) transmission.

11. A network device for controlling resources for scheduled and non-scheduled transmissions in a communication network, said network device (30) comprising:
a) setting means (340) for setting at least one threshold for a combined throughput of said scheduled and non-scheduled transmissions;
b) priority allocation means (330) for allocating at least two throughput areas (210, 220, 230) based on said at least one threshold, and for allocating for each of said at least two throughput areas (210, 220, 230) dedicated transmission priority orders for traffic types of said scheduled and non-scheduled transmission; and
c) resource control means (310) for controlling resource allocation for said scheduled and non-scheduled transmissions based on said dedicated transmission priority orders.

12. A network device according to claim 11, wherein said setting means (304) is configured to set a minimum value of the combined throughput for a subset of said traffic types and a maximum value of said combined throughput for said subset.

13. A network device according to claim 11 or 12, further comprising scheduling means (320) for determining respective bit rates allocated to said traffic types, and outputting said determined respective bit rates to said priority allocation means (330).

14. A network device according to any one of claims 11 to 13, wherein said priority allocation means (330) is configured to generate a priority information (P), said priority information (P) indicating a priority order of said traffic types or at least a traffic type to which the highest priority has been allocated.

15. A network device according to any one of the preceding claims, wherein said throughput areas comprise a first area (210) defined below a minimum value of scheduled throughput for a predetermined kind of traffic, a second area (220) defined between said minimum value of said scheduled throughput and a minimum value of the combined throughput for a subset of said traffic types, and a third area (230) defined above said minimum value of said combined throughput for said subset.

16. A network device according to claim 15, wherein said traffic types comprise dedicated channel traffic, scheduled enhanced dedicated channel traffic, and non-scheduled traffic, wherein said subset comprises said dedicated channel traffic and said non-scheduled traffic, and wherein said predetermined kind of traffic comprises said dedicated channel traffic.

17. A network device according to claim 16, wherein said priority allocation means (330) is configured to determine said combined throughput of said subset and, if said combined throughput is determined to be located within said first throughput area (210), set the priority order so that the highest priority is allocated to said dedicated channel traffic; if said combined throughput is determined to be located within said second throughput area (220), set the priority order so that the highest priority is allocated to said non-scheduled traffic, and if said combined throughput is determined to be located within said third throughput area (230), set the priority order so that the highest priority is allocated to said scheduled enhanced dedicated channel traffic.

18. A network device according to claim 17, wherein said priority allocation means (330) is configured to allocate the lowest priority to said scheduled enhanced dedicated channel traffic, if said combined throughput is determined to be located within said first (210) or second throughput area (220).

19. A network device according to claim 17 or 18, wherein said priority allocation means (330) is configured to signal an additional priority information indicating a traffic type, to which the second highest priority is allocated, if said combined throughput is determined to be located within said third throughput area (230).

20. A network device according to any one of claims 11 to 19, wherein said network device is a radio network controller device (30).

21. A computer program product comprising code means for generating the steps of method claim 1 when run on a computer device (30).
